# EUROPÄISCHE PATENTANMELDUNG

(11) **EP 1 380 452 A2**
(43) Veröffentlichungstag der Anmeldung: **14.01.2004**
(21) Anmeldenummer: 03010962.3
(22) Anmeldetag: 16.05.2003
(51) Int. Cl.: B60G 13/00, B60G 15/14

(54) **Dämpferlager mit konturierter Stirnfläche für Stossdämpfer in Kraftfahrzeugen**

(30) Priorität: 29.06.2002 DE 10229287
(71) Anmelder: Continental Aktiengesellschaft, 30165 Hannover (DE)
(72) Erfinder: Treder, Christian, 31535 Neustadt a. Rbge. (DE); Zoufal, Stefan, 30926 Dedensen (DE)

(57) **Zusammenfassung**

Dämpferlager insbesondere zur Lagerung von Stoßdämpfern in Kraftfahrzeugen, wobei das Dämpferlager (11) am Fahrzeugaufbau zwischen zwei Einspannflächen (14,16,22,24) in axialer Richtung einer Kolbenstange (48) des Stoßdämpfers eingebaut und durch eine zentrale Öffnung mit der Kolbenstange des Stoßdämpfers verbunden ist, wobei mindestens eine äußere axiale Stirnfläche in Umfangsrichtung mindestens eine Erhebung (8) und eine Senke (9) aufweist und dass die Erhebungen und die Senken der äußeren axialen Stirnfläche in Umfangsrichtung eine Wellenform erzeugen.

## Beschreibung

Die Erfindung betrifft gemäß dem Oberbegriff des Anspruchs 1 ein Dämpferlager insbesondere zur Lagerung von Stoßdämpfern in Kraftfahrzeugen, wobei das Dämpferlager am Fahrzeugaufbau zwischen zwei Einspannflächen in axialer Richtung der Kolbenstange des Stoßdämpfers eingebaut und durch eine zentrale Öffnung mit der Kolbenstange des Stoßdämpfers verbunden ist.

Ein Dämpferlager der eingangs genannten Art ist zum Beispiel aus der deutschen Gebrauchsmusterschrift DE 201 18 533 U1 bekannt. Das aus der Druckschrift DE 201 18 533 U1 bekannte Dämpferlager aus Polyurethan-Elastomeren wird in Automobilen innerhalb des Fahrwerkes verwendet. Diese Anwendung ist allgemein bekannt. Insbesondere werden solche Dämpferlager als schwingungsdämpfende Federelemente in Kraftfahrzeugen eingesetzt. Dabei übernehmen die Federelemente (Dämpferlager) die Anbindung des Stoßdämpfers an den Fahrzeugaufbau und/oder an Fahrwerkskomponenten. Durch eine solche elastische Ankopplung werden sowohl Schwingungen isoliert, die von der Fahrbahn hervorgerufen und über Rad und Stoßdämpfer weitergeleitet werden, als auch solche die vom Stoßdämpfer selbst hervorgerufen werden. Die Ankopplung wird so gestaltet, dass kardanische Bewegungen des Stoßdämpfers ermöglicht werden und die Anforderungen in axialer, radialer und kardanischer Richtung erfüllt werden.

Weiterhin ist aus der deutschen Patentschrift DE19928599C1 ein elastisches Lager zum Abstützen eines Bauteils, insbesondere ein Stützlager für ein Federbein eines Kraftfahrzeuges bekannt. Das Lager umfasst ein Gehäuse, das an einem Tragteil festlegbar ist. Das Gehäuse weist mindestens zwei miteinander verbundene Gehäuseteile auf. In dem Gehäuse ist ein Dämpfungselement zum Aufnehmen einer mit dem abzustützenden Bauteil verbundenen Lagerplatte angeordnet. Das Dämpfungselement dient zum Dämpfen von Bewegungen zwischen dem Bauteil und dem Tragteil in einer Belastungsrichtung. Zur Verringerung der Montagetoleranzen in diese Belastungsrichtung sind die Gehäuseteile nebeneinander angeordnet. Das Dämpfungelement weist an den axial inneren Stirnflächen zur Lagerplatte zueinander parallele und senkrecht zur Achse der Kolbenstange des Stoßdämpfers und der Belastungsrichtung verlaufende Rippen und/oder Nuten auf. Hierdurch kann die Dämpfungscharakteristik des Dämpfungselementes eingestellt und an die jeweils vorherrschenden Randbedingungen angepasst werden.

Weiterhin ist aus der deutschen Offenlegungsschrift DE10041359A1 ein elastisches Lager zum Abstützen eines Bauteils, insbesondere ein Federbeinstützlager, bekannt. Das Lager weist ein an einem Tragteil festlegbares Gehäuse auf, das ein Innenteil und ein das Innenteil gegenüber dem Gehäuse abstützendes Dämpfungselement umgibt. An dem Innenteil ist das abstützende Bauteil befestigbar. Das Gehäuse ist als einteiliges, das Dämpfungselement umgebendes Gussteil ausgebildet. Durch die einteilige Ausbildung des Gehäuses als Gussteil werden Montagetoleranzen verringert und eine hohe Lebensdauer des Lagers erreicht. Das Dämpfungselement weist an den äußeren axialen Stirnflächen eine Reihe von zueinander parallelen und senkrecht zur Achse der Kolbenstange des Stoßdämpfers verlaufenden Ausnehmungen auf, welche eine Variation der Steifigkeit ermöglichen.

Die axiale Kennung des Dämpferlagers beeinflusst im Wesentlichen die Übertragung von hörbaren Schwingungen vom Stoßdämpfer in den Fahrzeugaufbau, wobei sich die zylinderförmige Ausführungsform mit geschlossenen, ebenen Stirnflächen des Dämpferlagers als akustisch auffällig erwiesen hat. Dieses ist durch die hohe dynamische Steifigkeit dieser Ausführung begründet.

Aufgabe der Erfindung ist es, ein Dämpferlager für Stoßdämpfer in Kraftfahrzeugen zu schaffen, welches eine gute akustische Isolation zwischen dem Stoßdämpfer und dem Fahrzeugaufbau ermöglicht und die von der Fahrbahn und dem Stoßdämpfer hervorgerufenen Schwingungen, insbesondere die hörbaren, optimal dämpft.

Diese Aufgabe wird erfindungsgemäß durch die Merkmale des Anspruchs 1 gelöst. Das Dämpferlager weist an mindestens einer äußeren axialen Stirnfläche in Umfangsrichtung mindestens eine Erhebung und eine Senke auf, und die Erhebungen und Senken der axialen Stirnfläche erzeugen in Umfangsrichtung eine Wellenform.

Der Einbau des erfindungsgemäßen Dämpferlagers in Kraftfahrzeuge erfolgt wie bei herkömmlichen Dämpferlagern. An den Fahrzeugaufbau wird das Dämpferlager im äußeren Bereich zwischen zwei fahrzeugaufbaufesten Bauteilen, welche die äußeren axialen Stirnflächen des Dämpferlagers berühren, eingeklemmt und an den Stoßdämpfer über eine mittig verlaufende Bohrung mit der Kolbenstange des Stoßdämpfers verbunden. Aufgrund der über den Umfang gleichförmig umlaufenden Wellenform der äußeren axialen Stirnfläche liegt das Dämpferlager mit den Erhebungen weitestgehend gleichmäßig an der jeweiligen Einspannfläche der fahrzeugfesten Bauteile an, wodurch eine weitestgehend gleichmäßige Dämpfung erreicht wird. Das Einlegeteil ist mit einer möglichst großen Fläche an das dämpfende Element des Dämpferlagers angebunden, was einer Optimierung der Federrate des Dämpferlagers hinsichtlich einer Anpassung an den Einbau in ein ganz bestimmtes Fahrzeug und dessen Fahrwerksabstimmung erleichtert.

Der mit der Erfindung erzielte Vorteil ist insbesondere darin zu sehen, dass die wellenförmigen Erhebungen bzw. Senken in Umfangsrichtung einer äußeren Stirnfläche des Dämpferlagers die Übertragung von Fahrbahnschwingungen über den Stoßdämpfer bzw. von Schwingungen, welche vom Stoßdämpfer selbst hervorgerufen werden, gleichmäßig dämpft. Die Schwingungen werden in der Fahrzeugkarosserie ohne Rücksicht auf eine bestimmte Einbauorientierung des Dämpferlagers hinsichtlich der Akustik und Beschleunigungen minimiert. Vorteilhafterweise liegt im Bereich der Senke die axiale Stirnfläche nicht vollständig an der Einspannfläche an, so dass eine geringere Übertragungsfläche für die Schwingungen vorhanden ist. Ein weiterer Vorteil der Erfindung ist, dass die axiale Kennlinie des Dämpferlagers durch die Erhebung bzw. die Senke in progressiver oder degressiver Weise beeinflusst werden kann. Ein weiterer Vorteil ist, dass die Wellenform symmetrisch ausgebildet ist, womit der Montageaufwand des Dämpferlagers aufgrund einer nicht notwendigen Ausrichtung erheblich reduziert werden kann.

Gemäß einer Weiterbildung der Erfindung nach Anspruch 2 ist vorgesehen, dass die Wellenform der Erhebungen und Senken der axialen Stirnfläche in Umfangsrichtung sinus-, rechteck-, dreieck- und/oder trapezförmig ist. Mit einer solchen Wellenform lässt sich die Dämpfung des Dämpferlagers auf einen bestimmten Frequenzbereich der Schwingungen - insbesondere den akustisch hörbaren Frequenzbereich - abstimmen. Selbstverständlich ist die Ausbildung der Erhebungen und Senken nicht auf eine einzige der angegebenen Wellenformen beschränkt, sondern es sind auch Kombinationen der angegebenen oder weiterer Wellenformen untereinander möglich.

Gemäß einer Weiterbildung der Erfindung nach Anspruch 3 ist vorgesehen, dass beide äußeren axialen Stirnflächen in Umfangsrichtung eine Wellenform mit mindestens einer Erhebung und einer Senke aufweisen. Dadurch können beide axialen Stirnflächen des Dämpferlagers an den Einspannflächen akustisch optimal entkoppelt werden.

Gemäß einer Weiterbildung der Erfindung nach Anspruch 4 ist vorgesehen, dass die Erhebungen der axialen Stirnflächen in jedem Betriebszustand die fahrzeugaufbaufesten Einspannflächen, zwischen denen das Dämpferlager in axialer Richtung der Kolbenstange des Stoßdämpfers eingebaut und gelagert ist, berühren. Dadurch lassen sich Anschlaggeräusche des Dämpferlagers an den Einspannflächen vermeiden.

Gemäß einer Weiterbildung der Erfindung nach Anspruch 5 ist vorgesehen, dass die Erhebungen unter Vorspannung zwischen den axial anliegenden Einspannflächen eingebaut sind, womit ein weicher Übergang der axialen Kennlinie des Dämpferlagers erzeugt wird, so dass bei einem Belastungswechsel des Dämpferlagers von Zug auf Druck oder umgekehrt ein schlagartiger Sprung der Kennlinie (ähnlich einem Anschlagen des Dämpferlagers an der jeweiligen Einspannfläche) vermieden wird, was akustisch vorteilhaft ist.

Gemäß einer Weiterbildung der Erfindung nach Anspruch 6 ist vorgesehen, dass die Erhebungen der einen Stirnfläche in axialer Richtung über den Erhebungen der anderen Stirnfläche liegen (fluchten) und das die Senken der einen Stirnfläche in axialer Richtung über den Senken der anderen Stirnfläche liegen (fluchten). Damit lässt sich auf eine einfache Art und Weise eine axiale Kennlinie des Dämpferlagers erzeugen, als wenn man ein härteres Material verwendet hätte. Ein weiterer Vorteil der Weiterbildung der Erfindung ist, dass die Schwingungsbedämpfung in einfacher Weise auf einen ganz bestimmten Frequenzbereich abgestimmt werden kann.

Gemäß einer Weiterbildung der Erfindung nach Anspruch 7 ist vorgesehen, dass die Erhebungen der einen Stirnfläche in axialer Richtung über den Senken der anderen Stirnfläche liegen (fluchten) und das die Senken der einen Stirnfläche in axialer Richtung über den Erhebungen der anderen Stirnfläche liegen (fluchten). Damit lässt sich auf eine einfache Art und Weise eine weichere axiale Kennlinie des Dämpferlagers erzeugen. Ein weiterer Vorteil der Weiterbildung der Erfindung ist, dass die Schwingungsbedämpfung in einfacher Weise auf einen ganz bestimmten Frequenzbereich abgestimmt werden kann.

Gemäß einer Weiterbildung der Erfindung nach Anspruch 8 ist vorgesehen, dass eine gerade Anzahl von Erhebungen und Senken je axialer Stirnfläche vorhanden ist, womit die Schwingungsbedämpfung in einfacher Weise auf einen ganz bestimmten Frequenzbereich abgestimmt werden kann. Ein weiterer Vorteil der Erfindung ist, dass der Montageaufwand aufgrund einer nicht notwendigen Ausrichtung des Dämpferlagers beim Einbau erheblich reduziert wird.

Gemäß einer Weiterbildung der Erfindung nach Anspruch 9 ist vorgesehen, dass eine ungerade Anzahl von Erhebungen und Senken je axialer Stirnfläche vorhanden ist, womit die Schwingungsbedämpfung in einfacher Weise auf einen ganz bestimmten Frequenzbereich abgestimmt werden kann. Ein weiterer Vorteil der Erfindung ist, dass der Montageaufwand aufgrund einer nicht notwendigen Ausrichtung des Dämpferlagers beim Einbau erheblich reduziert wird.

Gemäß einer Weiterbildung der Erfindung nach Anspruch 10 ist vorgesehen, dass das dämpfende Element aus einem Elastomer - vorzugsweise Gummi - besteht. Dadurch lässt sich das Dämpferlager sehr kostengünstig herstellen.

Gemäß einer Weiterbildung der Erfindung nach Anspruch 11 ist vorgesehen, dass das dämpfende Element aus einem Polyurethan-Elastomer (PUR) besteht. Polyurethan-Elastomere sind für das Einsatzgebiet hinsichtlich der Materialeigenschaften besonders gut geeignet und kostengünstig herstellbar.

Gemäß einer Weiterbildung der Erfindung nach Anspruch 12 ist vorgesehen, dass das dämpfende Element aus Cellasto® besteht. Der Werkstoff Cellasto® zeichnet sich für das Einsatzgebiet hinsichtlich der Materialeigenschaften besonders aus, wobei eine gegenüber konventionellen Dämpferlagerwerkstoffen wesentlich größere Dämpfung insbesondere der Radeigenfrequenz zu nennen ist. Ein weiterer Vorteil der Weiterbildung der Erfindung ist, dass der Werkstoff Cellasto® eine besonders geringe Querdehnung aufweist.

Gemäß einer Weiterbildung der Erfindung nach Anspruch 13 ist vorgesehen, dass mehr als eine Wellenform je Stirnfläche mit unterschiedlicher Höhe der Erhebungen und unterschiedlicher Tiefe der Senken vorhanden ist. Dadurch lässt sich die axiale Kennlinie des Dämpferlagers oberhalb eines definierten Einfederungsweges stark verändern. Ein weitere Vorteil der Weiterbildung der Erfindung ist, dass sich das Vorzeichen der Steigung der axialen Kennlinie ändert.

Gemäß einer Weiterbildung der Erfindung nach Anspruch 14 ist vorgesehen, dass die Erhebungen und Senken von mindestens zwei Wellenformen sich in Umfangsrichtung je Stirnfläche abwechseln, womit eine symmetrische Stirnfläche entsteht, welche den Einbau und den Montageaufwand des Dämpferlagers erheblich reduziert. Ein weiterer Vorteil der Weiterbildung der Erfindung ist, dass die Schwingungsdämpfung auf einfache Art und Weise auf einen oder mehrere Frequenzbereich(e) abgestimmt werden kann.

Gemäß einer Weiterbildung der Erfindung nach Anspruch 15 ist vorgesehen, dass die zweite oder jede weitere Wellenform mit geringerer Höhe der Erhebungen mit einer geringeren oder keinen Vorspannung eingebaut ist. Dadurch lässt sich die axiale Kennlinie des Dämpferlagers oberhalb eines definierten Einfederungsweges sprungartig verändern - insbesondere die Dämpfung erhöhen. Ein weitere Vorteil der Weiterbildung der Erfindung ist, dass sich das Vorzeichen der Steigung der axialen Kennlinie ändert.

Gemäß einer Weiterbildung der Erfindung nach Anspruch 16 ist vorgesehen, dass die Wellenform auf der bzw. den axial an dem dämpfenden Element anliegenden Einspannfläche bzw. Einspannflächen abgebildet ist. Damit lässt sich das dämpfende Element kostengünstig aus einem Stangenmaterial fertigen. Ein weiterer Vorteil ist der geringere Montageaufwand des dämpfenden Elementes bzw. des Dämpferlagers, da eine aufwendige Ausrichtung aufgrund der an diesem Bauteil fehlenden Wellenform entfällt.

Gemäß einer Weiterbildung der Erfindung nach Anspruch 17 ist vorgesehen, dass in Umfangsrichtung ein biegsamer Rand als Anlage- oder Anschlagfläche vorhanden ist. Der biegsame Rand ermöglicht eine besonders flache axiale Kennlinie des Dämpferlagers.

Gemäß einer Weiterbildung der Erfindung nach Anspruch 18 ist vorgesehen, dass ein Einlegeteil aus Metall oder Kunststoff vorhanden ist und eine ebene Verbindung zum dämpfenden Element entsteht. Mit diesem Einlegeteil wird die Haltbarkeit des Dämpferlagers insbesondere der Anbindung an die Kolbenstange des Stoßdämpfers wesentlich erhöht. Die Verbindung des Einlegeteils zum dämpfenden Element sollte eine möglichst große Fläche umfassen, damit sich die Kennlinie des Dämpferlagers auf einfache Art und Weise verändern lässt.

Gemäß einer Weiterbildung der Erfindung nach Anspruch 19 ist vorgesehen, dass das Einlegeteil wellenförmig konturiert ist, womit sich die Kennlinie des Dämpferlagers in axialer und radialer Richtung stark beeinflussen lässt.

Gemäß einer Weiterbildung der Erfindung nach Anspruch 20 ist vorgesehen, dass das dämpfende Element eine Höhe von 22 bis 30 mm, einen Außendurchmesser von 40 bis 52 mm, einen Innendurchmesser von 25 bis 35 mm, innen eine kreisrunde Aussparung mit einem Durchmesser von 40 bis 46 mm und einer Höhe von 7 bis 13 mm aufweist. Diese Kombination von Größenangaben des dämpfenden Elementes ist vorteilhafterweise für eine Anbindung der Kolbenstange eines Stoßdämpfers an die Fahrzeugkarosserie im Bereich der Vorderachse eines Kraftfahrzeuges verwendbar.

Gemäß einer Weiterbildung der Erfindung nach Anspruch 21 ist vorgesehen, dass das Einlegeteil ringförmig ausgebildet ist und eine Höhe von 5 bis 15 mm, einen Außendurchmesser von 40 bis 46 mm, einen Innendurchmesser von 10 bis 20 mm und eine zapfenartige Erhöhung mit einer Höhe von 5 bis 15 mm und einem Außendurchmesser von 15 bis 25 mm aufweist. Diese Kombination von Größenangaben des Einlegeteiles ist vorteilhafterweise für eine Anbindung der Kolbenstange eines Stoßdämpfers an die Fahrzeugkarrosserie im Bereich der Vorderachse eines Kraftfahrzeuges verwendbar.

Gemäß einer Weiterbildung der Erfindung nach Anspruch 22 ist vorgesehen, dass das dämpfende Element eine Höhe von 28 bis 36 mm, einen Außendurchmesser von 52 bis 68 mm, einen Innendurchmesser von 30 bis 45 mm, innen eine kreisrunde Aussparung mit einem Durchmesser von 46 bis 60 mm und einer Höhe von 7 bis 13 mm aufweist. Diese Kombination von Größenangaben des dämpfenden Elementes ist vorteilhafterweise für eine Anbindung der Kolbenstange eines Stoßdämpfers an die Fahrzeugkarrosserie im Bereich der Hinterachse eines Kraftfahrzeuges verwendbar.

Gemäß einer Weiterbildung der Erfindung nach Anspruch 23 ist vorgesehen, dass das Einlegeteil ringförmig ausgebildet ist und eine Höhe von 5 bis 15 mm, einen Außendurchmesser von 46 bis 60 mm, einen Innendurchmesser von 10 bis 20 mm und eine zapfenartige Erhöhung mit einer Höhe von 5 bis 15 mm und einem Außendurchmesser von 15 bis 25 mm aufweist. Diese Kombination von Größenangaben des Einlegeteiles ist vorteilhafterweise für eine Anbindung der Kolbenstange eines Stoßdämpfers an die Fahrzeugkarrosserie im Bereich der Hinterachse eines Kraftfahrzeuges verwendbar.

Erfindungsgemäß ist nach Anspruch 24 ein Luftfedermodul vorgesehen, dass mit einem Deckel und einem daran befestigten luftdichten Rollbalg, einem Abrollkolben, welcher an einem Zylinderrohr des Stoßdämpfers befestigt ist und auf dem der Rollbalg abrollt, einem Dämpferlager, welches die Kolbenstange des Stoßdämpfers mit dem fahrzeugaufbaufesten Deckel des Luftfedermodules verbindet. Das Dämpferlager ist im Luftfederdeckel in axialer Richtung der Kolbenstange des Stoßdämpfers zwischen zwei Einspannflächen verspannt. Weiterhin enthält das Luftfedermodul eine Zusatzfeder, welche konzentrisch zur Kolbenstange angeordnet und in einem Führungsring geführt wird, der mit dem Deckel fest verbunden ist, und sich an diesem einseitig abstützt. Das Zylinderrohr des Stoßdämpfers weist an einem axialen Ende an einer Radaufhängung befestigt ist und an dem anderen axialen Ende an der Stirnfläche eine Bohrung für die Kolbenstange auf. Bei fast vollständiger Einfederung des Luftfedermodules stützt sich die Stirnfläche des Zylinderrohres an der Zusatzfeder ab. Das Luftfedermodul dient zur Federung- und Dämpfung von Schwingungen in Kraftfahrzeugen, wobei das Dämpferlager nach einem oder mehreren der vorherigen Ansprüche ausgebildet ist.

Der mit dem Luftfedermodul erzielte Vorteil ist insbesondere darin zu sehen, dass die erfindungsgemäß wellenförmigen Erhebungen bzw. Senken in Umfangsrichtung einer äußeren Stirnfläche des Dämpferlagers die Übertragung von Fahrbahnschwingungen über den Stoßdämpfer bzw. von Schwingungen, welche vom Stoßdämpfer selbst hervorgerufen werden, gleichmäßig dämpft, so dass die Schwingungen in der Fahrzeugkarosserie ohne Rücksicht auf eine bestimmte Einbauorientierung des Dämpferlagers hinsichtlich der Akustik und Beschleunigungen minimiert werden.

Ausführungsbeispiele und weitere Vorteile der Erfindung werden im Zusammenhang mit den nachstehenden Figuren erläutert, darin zeigen:
- Fig. 1: Ein Dämpferlager,
- Fig. 1a: Draufsicht auf eine Stirnfläche eines Dämpferlagers mit wellenförmiger Kontur,
- Fig. 2: Ein Einbaubeispiel eines Dämpferlagers,
- Fig. 3: Eine rechteckförmige Kontur einer Stirnfläche,
- Fig. 3a: Eine Stirnflächenkontur,
- Fig. 3b: Eine Stirnflächenkontur,
- Fig. 4: Eine dreieckförmige Kontur einer Stirnfläche,
- Fig. 5: Eine sinusförmige Kontur einer Stirnfläche,
- Fig. 6: Ein Luftfedermodul mit Dämpferlager,
- Fig. 7: Ein Dämpferlager,
- Fig. 8: Ein Dämpferlager.

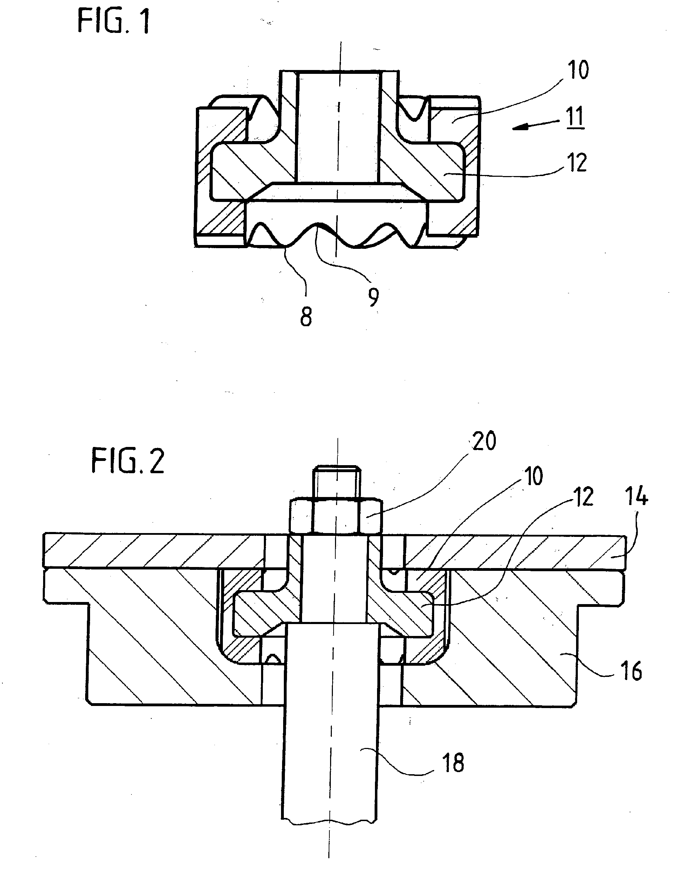

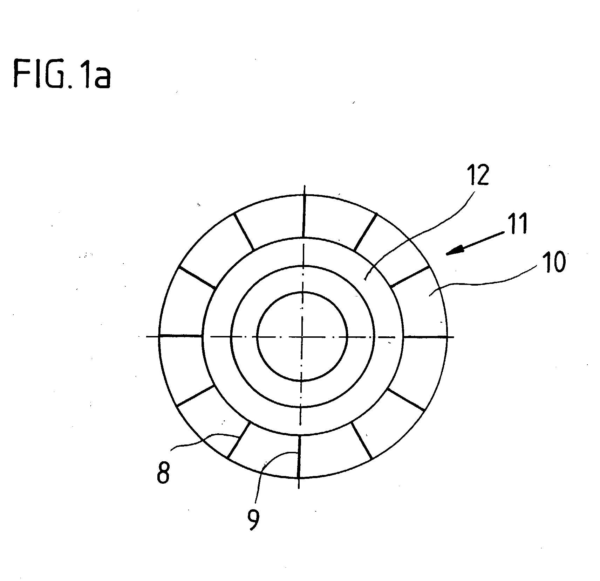

Figur 1 zeigt ein Dämpferlager 11 bestehend aus einem dämpfenden Element 10 und einem Einlegeteil 12. Das dämpfende Element 10 ist als ringförmiges Bauteil ausgeführt und wird vorzugsweise aus einem elastomeren Material, wie zum Beispiel Gummi oder Polyurethanschaum, hergestellt. Beide äußeren axialen Stirnflächen des dämpfenden Elementes 10 beschreiben eine sinusförmige Wellenform, welche in Umfangsrichtung orientiert ist. In der mittigen Öffnung des dämpfenden Elementes 10 ist eine kreisrunde Aussparung zur Aufnahme des Einlegeteils 12 angebracht. Das Einlegeteil 12 ist hutförmig mit einer mittig verlaufenden Bohrung zur Durchführung der Kolbenstange ausgebildet, wobei einseitig ein zapfenartiger Flansch ausgeführt ist. Auf der anderen axialen Seite des Einlegeteils 12 ist eine Vertiefung mit einer Einführphase und dann eben verlaufenden Fläche ausgebildet. Diese Ausbildung erleichtert die Durchführung der Kolbenstange eines Stoßdämpfers und den Zusammenbau dieser mit dem Dämpferlager 11. Das Einlegteil 12 ist aus einem härteren Material als das dämpfende Element 10 - vorzugsweise Metall oder Kunststoff - hergestellt.

Figur 1a zeigt eine schematische Draufsicht auf eine Stirnfläche mit wellenförmiger Kontur eines Dämpferlagers 11, bestehend aus dem dämpfenden Element 10 und dem Einleger 12. Die Stirnfläche weist eine in Umfangsrichtung umlaufende Wellenform auf. Die Erhebungen 8 und Senken 9 sind als Biegelinien einer sinusförmigen Wellenform, wie diese in Figur 1 dargestellt ist, in Umfangsrichtung des Dämpferlagers 11 zu erkennen. Eine Erhebung 8 ist dabei von jeweils zwei Senken 9 umgeben und umgekehrt eine Senke 9 von jeweils zwei Erhebungen.

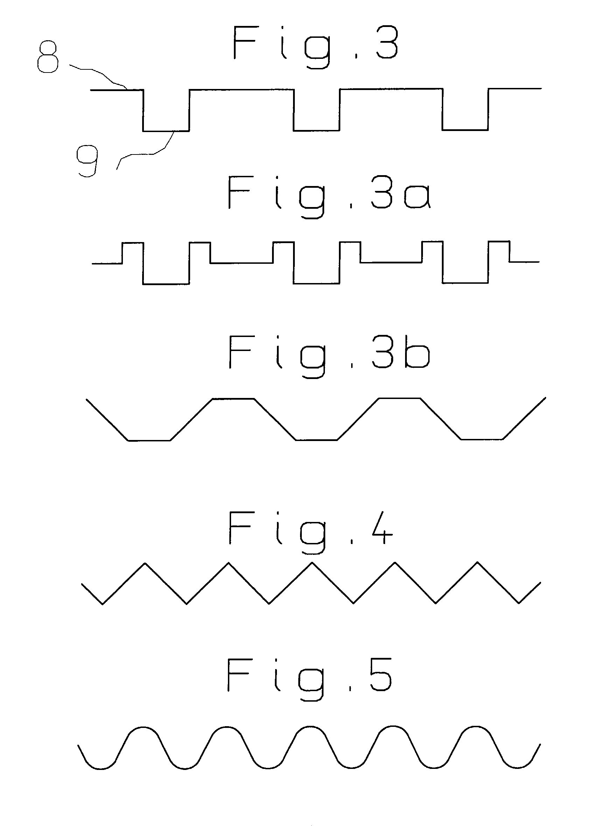

Figur 2 zeigt den schematischen Einbau des Dämpferlagers, wobei das Einlegeteil 12 mit der Kolbenstange 18 eines Stoßdämpfers durch eine auf die Kolbenstange 18 geschraubte Mutter 20 fest verbunden ist. Das dämpfende Element 10 des Dämpferlagers ist in axialer Richtung zwischen einer ersten Platte 14 und einer zweiten Platte 16 verspannt. Die äußeren axialen Stirnflächen des dämpfenden Elementes 10 liegen mit den Erhebungen 8 an den jeweiligen Einspannflächen der ersten und zweiten Platte 14, 16 an, wobei das dämpfende Element 10 unter Vorspannung zwischen den beiden Platten 14, 16 eingebaut ist, so dass sich die Erhebungen 8 geringfügig verformen. Das dämpfende Element 10 liegt in radialer Richtung nur in den Randbereichen an den beiden Platten 14, 16 an, so dass das Dämpferlager keine radialen Kräfte aufnehmen und übertragen kan. Die erste und die zweite Platte 14, 16 werden durch eine herkömmliche Fügetechnik mit einander verbunden, zum Beispiel miteinander verschraubt, verpresst, verschweisst oder verklebt. Die zweite Platte 16 ist in diesem Ausführungsbeispiel der Figur 2 mit einer topfförmigen Aussparung zur Aufnahme des Dämpferlagers versehen und die erste Platte 14 ist eben ausgeführt.

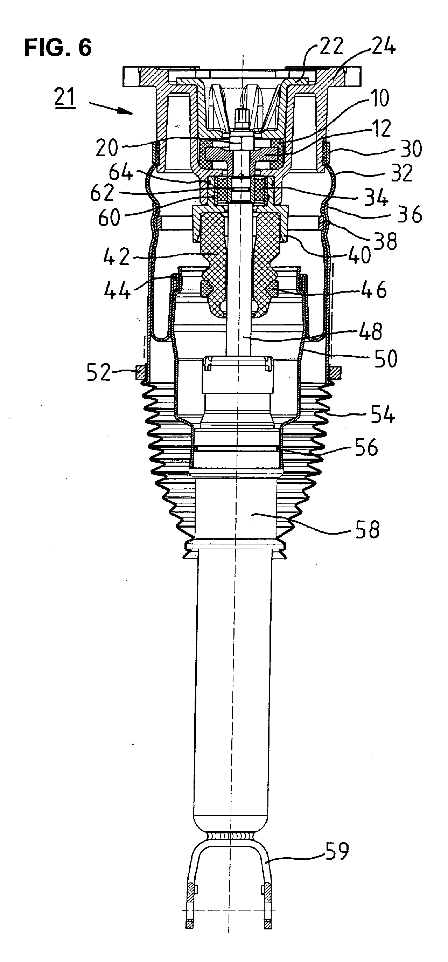

Figur 3 zeigt schematisch eine rechteckförmige Wellenform, wie diese als Kontur einer axialen Stirnfläche des Dämpferlagers 11 bzw. des dämpfenden Elementes 10 über den Umfang ausgebildet sein kann. Figur 3a zeigt schematisch eine rechteckförmige Wellenform mit unterschiedlichen Höhen der Erhebungen 8 und Senken 9, wie diese als Kontur einer axialen Stirnfläche des Dämpferlagers 11 über den Umfang ausgebildet sein kann. Figur 3b zeigt schematisch eine trapezförmige Wellenform als Kombination einer dreieckförmigen mit einer rechteckförmigen Wellenform, wie diese als Kontur einer axialen Stirnfläche des Dämpferlagers 11 über den Umfang ausgebildet sein kann. Figur 4 zeigt schematisch eine dreieckförmige Wellenform, wie diese als Kontur einer axialen Stirnfläche des Dämpferlagers 11 über den Umfang ausgebildet sein kann. Figur 5 zeigt schematisch eine sinusförmige Wellenform, welche die Kontur einer axialen Stirnfläche des Dämpferlagers 11 über den Umfang beschreibt. Die Kontur der äußeren axialen Stirnfläche des Dämpferlagers 11 ist aber nicht auf eine der genannten Wellenformen beschränkt. Es ist jede beliebige Kombination dieser Wellenformen zu einer neuen Kontur denkbar, zum Beispiel kann die Kombination einer rechteckförmigen mit einer dreieckförmigen Wellenform als eine trapezförmige Kontur der axialen Stirnfläche des Dämpferlagers oder der anliegenden Einspannflächen bzw. Platten verwendet werden.

Figur 6 zeigt ein Luftfedermodul 21, welches in Kraftfahrzeugen vorzugsweise an einem ersten Ende karosseriefest und an einem zweiten Ende an einer Radaufhängung befestigbar ist. Das Luftfedermodul besteht aus einem karosseriefesten Deckel 24, einem daran luftdicht mit einem Klemmring 30 befestigten ersten Endes eines Rollbalges 32, wobei das zweite Ende des Rollbalges 32 mit einem Klemmring 44 luftdicht mit einem Abrollkolben 50 verbunden ist. Der Abrollkolben 50 ist über einen O-Ring 56 luftdicht mit dem Stoßdämpferrohr 58 verbunden. An das Stoßdämpferrohr 58 ist vorzugsweise die an der Radaufhängung befestigbare Dämpfergabel 59 angeschweisst.

In den Deckel 24 ist das Dämpferlager bestehend aus dem elastischen Element 10 und dem Einlegeteil 12 eingebaut. Die axiale Vorspannung und Fixierung des dämpfenden Elementes 10 wird durch einen eingepressten Verschlusstopf 22 erreicht. Zur Dämpfung der auftretenden radialen Schwingungen wird ein radiales Dämpferlager 34, bestehend aus einem Elastomerteil, welches von jeweils einem innen und außen liegenden Kunststoffund/oder Metallring umgeben wird, eingesetzt. Das radiale Dämpferlager 34 stützt sich in axialer Richtung einerseits an der Kolbenstange 48 und andererseits an dem Einlegeteil 12 des axialen Dämpferlagers ab und ist durch eine Mutter 20 auf der Kolbenstange 48 fixiert. Ein O-Ring 62 dichtet den inneren Kunststoff- und/oder Metallring des radialen Dämpferlagers 34 zur Kolbenstange 48 luftdicht ab. Der äußere Kunststoff- und/oder Metallring ist über einen O-Ring 60 luftdicht zu einem Führungsring 40, welcher luftdicht über einen O-Ring 64 in dem Deckel 24 fixiert - vorzugsweise eingepresst - ist, abgedichtet. In dem Führungsring 40 wird eine Zusatzfeder 42 radial geführt und fixiert - vorzugsweise eingepresst, welche bei vollständiger axialer Einfederung des Luftfedermoduls 21 zusätzliche Federungs- und Dämpfungsarbeit aufnimmt. Ein ringförmiger Stützring 46, welcher in einer Nut der Zusatzfeder 42 fixiert ist, erhöht die Lebensdauer der Zusatzfeder 42.

Eine Außenführung 36 ist an einem ersten Ende an dem Rollbalg 32 mit einem Klemmring 38 befestigt. An dem zweiten Ende der Außenführung 36 ist mit einem Klemmring 52 ein erstes Ende eines Faltenbalges 54 befestigt, welcher den Raum der Abrollfalte des Rollbalges 32 zwischen dem Abrollkolben 50 und der Außenführung 36 vor eindringenden Schmutzpartikeln oder dgl. schützt. Das zweite Ende des Faltenbalges 50 ist an dem Stoßdämpferrohr 58 über einen ringförmigen Absatz fixiert. Das Ausführungsbeispiel des Luftfedermoduls 21 wird vorzugsweise in Hinterachsen von Kraftfahrzeugen verwendet.

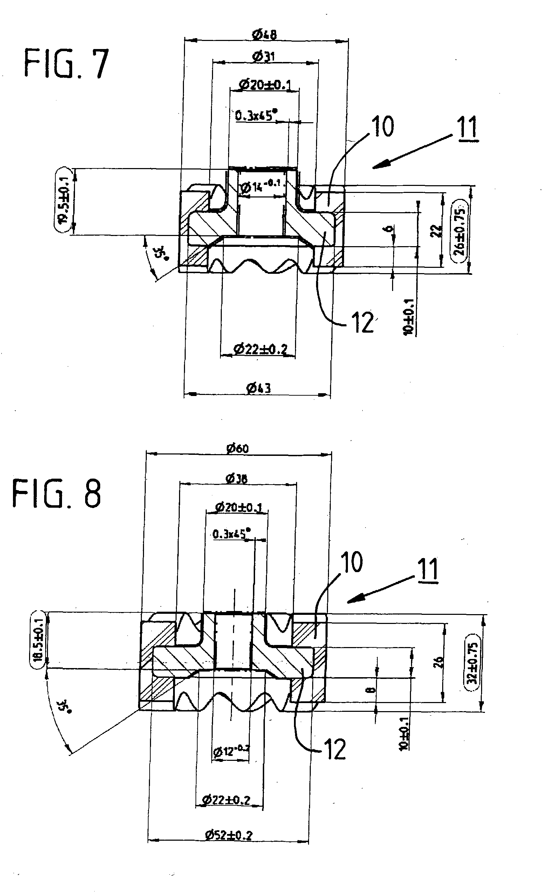

Figur 7 zeigt ein vorzugsweise in Vorderachsmodulen eingesetztes Dämpferlager 11, bestehend aus einem ringförmigen dämpfenden Element 10 aus vorzugsweise zelligem Polyurethanelastomer und einem Einlegteil 12 aus Kunststoff oder Metall. Das dämpfende Element 10 hat insbesondere einen Außendurchmesser von 40 bis 52 mm, besonders bevorzugt von 48 mm, eine Höhe von 22 bis 30 mm, besonders bevorzugt von 26 mm, innen eine kreisrunde Aussparung mit einem Durchmesser von 40 bis 46 mm, besonders bevorzugt von 43 mm, einer Höhe der Aussparung von 7 bis 13 mm, besonders bevorzugt von 10 mm, und eine kreisrunde mittige Öffnung mit einem Durchmesser von 25 bis 37 mm, besonders bevorzugt von 31 mm. Die Konturen der jeweiligen äußeren axialen Stirnflächen weisen in Umfangsrichtung eine sinusförmige Wellenform auf, wobei die Senken 9 der ersten axialen Stirnfläche in axialer Richtung über den Erhebungen 8 der zweiten axialen Stirnfläche liegen und umgekehrt.

Das Einlegeteil 12 wird in der Aussparung des dämpfenden Elementes 10 eingelegt, einvulkanisiert oder eingeschäumt, wobei eine möglichst große Kontaktfläche zwischen dem dämpfenden Element 10 und dem Einlegeteil 12 angestrebt wird, um die Kennlinie des Dämpferlagers 11 einfach verändern zu können. Das ringförmige Einlegteil 12 weist insbesondere eine Höhe von 5 bis 15 mm, besonders bevorzugt von 10 mm, einen Außendurchmesser von 40 bis 46 mm, besonders bevorzugt von 43 mm, einen Innendurchmesser von 10 bis 20 mm, besonders bevorzugt von 14 mm, und an einem ersten axialen Ende eine zapfenartige Erhöhung mit einer Höhe von 5 bis 15 mm, besonders bevorzugt von 12 mm, und einem Außendurchmesser der zapfenartigen Erhöhung von 15 bis 25 mm, besonders bevorzugt von 20 mm, auf. An dem zweiten axialen Ende weist das Einlegteil 12 eine Vertiefung insbesondere mit einem Durchmesser von 18 bis 26 mm , besonders bevorzugt von 22 mm, und eine von diesem Durchmesser nach außen verlaufenden Einführschräge insbesondere mit einem Winkel von 30° bis 40°, besonders bevorzugt von 35°, auf.

Figur 8 zeigt ein vorzugsweise in Hinterachsmodulen eingesetztes Dämpferlager 11, bestehend aus einem ringförmigen dämpfenden Element 10 aus vorzugsweise zelligem Polyurethanelastomer und einem Einlegteil 12 aus Kunststoff oder Metall. Das dämpfende Element 10 hat insbesondere einen Außendurchmesser von 52 bis 68 mm, besonders bevorzugt von 60 mm, eine Höhe von 28 bis 36 mm, besonders bevorzugt von 32 mm, innen eine kreisrunde Aussparung mit einem Durchmesser von 46 bis 60 mm, besonders bevorzugt von 52 mm, einer Höhe der Aussparung von 7 bis 13 mm, besonders bevorzugt von 10 mm, und eine kreisrunde mittige Öffnung mit einem Durchmesser von 30 bis 46 mm, besonders bevorzugt von 38 mm. Die Konturen der jeweiligen äußeren axialen Stirnflächen weisen in Umfangsrichtung eine sinusförmige Wellenform auf, wobei die Senken 9 der ersten axialen Stirnfläche in axialer Richtung über den Erhebungen 8 der zweiten axialen Stirnfläche liegen und umgekehrt.

Das Einlegeteil 12 wird in der Aussparung des dämpfenden Elementes 10 eingelegt, einvulkanisiert oder eingeschäumt, wobei eine möglichst große Kontaktfläche zwischen dem dämpfenden Element 10 und dem Einlegeteil 12 angestrebt wird, um die Kennlinie des Dämpferlagers 11 einfach verändern zu können. Das ringförmige Einlegteil 12 weist insbesondere eine Höhe von 5 bis 15 mm, besonders bevorzugt von 10 mm, einen Außendurchmesser von 46 bis 60 mm, besonders bevorzugt von 52 mm, einen Innendurchmesser von 10 bis 20 mm, besonders bevorzugt von 12 mm, und an einem ersten axialen Ende eine zapfenartige Erhöhung mit einer Höhe von 5 bis 15 mm, besonders bevorzugt von 11 mm, und einem Außendurchmesser der zapfenartigen Erhöhung von 15 bis 25 mm, besonders bevorzugt von 20 mm, auf. An dem zweiten axialen Ende weist das Einlegteil 12 eine Vertiefung insbesondere mit einem Durchmesser von 18 bis 26 mm , besonders bevorzugt von 22 mm, und eine von diesem Durchmesser nach außen verlaufenden Einführschräge insbesondere mit einem Winkel von 30° bis 40°, besonders bevorzugt von 35°, auf.

### Bezugszeichenliste

(ist Teil der Beschreibung)
- 8: Erhebung
- 9: Senke
- 10: Dämpfendes Element
- 11: Dämpferlager
- 12: Einlegeteil
- 14: erste Einspannplatte
- 16: zweite Einspannplatte
- 18: Ausschnitt Kolbenstange
- 20: Mutter
- 21: Luftfedermodul
- 22: Verschlusstopf
- 24: Deckel
- 30: Klemmring
- 32: Rollbalg
- 34: Radiales Dämpferlager
- 36: Außenführung
- 38: Klemmring
- 40: Führungsring
- 42: Zusatzfeder
- 44: Klemmring
- 46: Stützring
- 48: Kolbenstange
- 50: Abrollkolben
- 52: Klemmring
- 54: Faltenbalg
- 56: O-Ring
- 58: Stoßdämpferrohr
- 59: Dämpfergabel
- 60, 62, 64: 64 O-Ring

## Patentansprüche

1. Dämpferlager (11) insbesondere zur Lagerung von Stoßdämpfern in Kraftfahrzeugen, wobei das Dämpferlager (11) am Fahrzeugaufbau zwischen zwei Einspannflächen (14, 16, 22, 24) in axialer Richtung einer Kolbenstange (48) des Stoßdämpfers eingebaut und durch eine zentrale Öffnung mit der Kolbenstange (48) des Stoßdämpfers verbunden ist **dadurch gekennzeichnet, dass** mindestens eine äußere axiale Stirnfläche in Umfangsrichtung mindestens eine Erhebung (8) und eine Senke (9) aufweist und dass die Erhebungen (8) und die Senken (9) der äußeren axialen Stirnfläche in Umfangsrichtung eine Wellenform erzeugen.

2. Dämpferlager (11) nach Anspruch 1 **dadurch gekennzeichnet, dass** die Wellenform der Erhebungen (8) und Senken (9) der axialen Stirnfläche in Umfangsrichtung sinus-, rechteck-, dreieck- und/oder trapezförmig ist.

3. Dämpferlager (11) nach einem oder mehreren der vorherigen Ansprüche **dadurch gekennzeichnet, dass** beide äußeren axialen Stirnflächen in Umfangsrichtung eine Wellenform mit mindestens einer Erhebung (8) und einer Senke (9) aufweisen.

4. Dämpferlager (11) nach einem oder mehreren der vorherigen Ansprüche **dadurch gekennzeichnet, dass** die Erhebungen (8) der axialen Stirnflächen in jedem Betriebszustand die fahrzeugaufbaufesten Einspannflächen (14, 16, 22, 24), zwischen denen das Dämpferlager (11) in axialer Richtung der Kolbenstange (48) des Stoßdämpfers eingebaut und gelagert ist, berühren.

5. Dämpferlager (11) nach einem oder mehreren der vorherigen Ansprüche **dadurch gekennzeichnet, dass** die Erhebungen (8) unter Vorspannung zwischen den axial anliegenden Einspannflächen (14, 16, 22, 24) eingebaut sind.

6. Dämpferlager (11) nach einem oder mehreren der vorherigen Ansprüche **dadurch gekennzeichnet, dass** die Erhebungen (8) der einen Stirnfläche in axialer Richtung über den Erhebungen (8) der anderen Stirnfläche liegen und das die Senken (9) der einen Stirnfläche in axialer Richtung über den Senken (9) der anderen Stirnfläche liegen.

7. Dämpferlager (11) nach einem oder mehreren der vorherigen Ansprüche **dadurch gekennzeichnet, dass** die Erhebungen (8) der einen Stirnfläche in axialer Richtung über den Senken (9) der anderen Stirnfläche liegen und das die Senken (9) der einen Stirnfläche in axialer Richtung über den Erhebungen (8) der anderen Stirnfläche liegen.

8. Dämpferlager (11) nach einem oder mehreren der vorherigen Ansprüche **dadurch gekennzeichnet, dass** eine gerade Anzahl von Erhebungen (8) und Senken (9) je axialer Stirnfläche vorhanden ist.

9. Dämpferlager (11) nach einem oder mehreren der vorherigen Ansprüche **dadurch gekennzeichnet, dass** eine ungerade Anzahl von Erhebungen (8) und Senken (9) je axialer Stirnfläche vorhanden ist.

10. Dämpferlager (11) nach einem oder mehreren der vorherigen Ansprüche **dadurch gekennzeichnet, dass** das dämpfende Element (10) aus einem Elastomer - vorzugsweiseGummi - besteht.

11. Dämpferlager (11) nach einem oder mehreren der vorherigen Ansprüche **dadurch gekennzeichnet, dass** das dämpfende Element (10) aus einem Polyurethan-Elastomer (PUR) besteht.

12. Dämpferlager (11) nach Anspruch 11 **dadurch gekennzeichnet, dass** das dämpfende Element (10) aus Cellasto® besteht.

13. Dämpferlager (11) nach einem oder mehreren der vorherigen Ansprüche **dadurch gekennzeichnet, dass** mehr als eine Wellenform je Stirnfläche mit unterschiedlicher Höhe der Erhebungen (8) und unterschiedlicher Tiefe der Senken (9) vorhanden ist.

14. Dämpferlager (11) nach einem oder mehreren der vorherigen Ansprüche **dadurch gekennzeichnet, dass** die Erhebungen (8) und Senken (9) von mindestens zwei Wellenformen sich in Umfangsrichtung je Stirnfläche abwechseln.

15. Dämpferlager (11) nach einem oder mehreren der vorherigen Ansprüche **dadurch gekennzeichnet, dass** die zweite oder jede weitere Wellenform mit geringerer Höhe der Erhebungen (8) mit einer geringeren oder keinen Vorspannung eingebaut ist.

16. Dämpferlager (11) nach einem oder mehreren der vorherigen Ansprüche **dadurch gekennzeichnet, dass** die Wellenform auf der bzw. den axial an dem dämpfenden Element (10) anliegenden Einspannfläche bzw. Einspannflächen (14, 16, 22, 24) abgebildet ist.

17. Dämpferlager (11) nach einem oder mehreren der vorherigen Ansprüche **dadurch gekennzeichnet, dass** in Umfangsrichtung ein biegsamer Rand als Anlage- oder Anschlagfläche vorhanden ist.

18. Dämpferlager (11) nach einem oder mehreren der vorherigen Ansprüche **dadurch gekennzeichnet, dass** ein Einlegeteil (12) aus Metall oder Kunststoff vorhanden ist und eine ebene Verbindung zum dämpfenden Element (10) entsteht.

19. Dämpferlager (11) nach Anspruch 18 **dadurch gekennzeichnet, dass** das Einlegeteil (12) wellenförmig konturiert ist.

20. Dämpferlager (11) nach einem oder mehreren der vorherigen Ansprüche **dadurch gekennzeichnet, dass** das dämpfende Element (10) eine Höhe von 22 bis 30 mm, einen Außendurchmesser von 40 bis 52 mm, einen Innendurchmesser von 25 bis 35 mm, innen eine kreisrunde Aussparung mit einem Durchmesser von 40 bis 46 mm und einer Höhe von 7 bis 13 mm aufweist.

21. Dämpferlager (11) nach einem oder mehreren der vorherigen Ansprüche **dadurch gekennzeichnet, dass** das Einlegeteil (12) ringförmig ausgebildet ist und eine Höhe von 5 bis 15 mm, einen Außendurchmesser von 40 bis 46 mm, einen Innendurchmesser von 10 bis 20 mm und eine zapfenartige Erhöhung mit einer Höhe von 5 bis 15 mm und einem Außendurchmesser von 15 bis 25 mm aufweist.

22. Dämpferlager (11) nach einem oder mehreren der vorherigen Ansprüche **dadurch gekennzeichnet, dass** das dämpfende Element (10) eine Höhe von 28 bis 36 mm, einen Außendurchmesser von 52 bis 68 mm, einen Innendurchmesser von 30 bis 45 mm, innen eine kreisrunde Aussparung mit einem Durchmesser von 46 bis 60 mm und einer Höhe von 7 bis 13 mm aufweist.

23. Dämpferlager (11) nach einem oder mehreren der vorherigen Ansprüche **dadurch gekennzeichnet, dass** das Einlegeteil (12) ringförmig ausgebildet ist und eine Höhe von 5 bis 15 mm, einen Außendurchmesser von 46 bis 60 mm, einen Innendurchmesser von 10 bis 20 mm und eine zapfenartige Erhöhung mit einer Höhe von 5 bis 15 mm und einem Außendurchmesser von 15 bis 25 mm aufweist.

24. Luftfedermodul (21) mit einem Deckel (24) und einem daran befestigten luftdichten Rollbalg (32), einem Abrollkolben (50), welcher an einem Zylinderrohr des Stoßdämpfers (58) befestigt ist und auf dem der Rollbalg (50) abrollt,
einem Dämpferlager (11), welches die Kolbenstange (48) des Stoßdämpfers mit dem fahrzeugaufbaufesten Deckel (24) des Luftfedermodules (21) verbindet, wobei das Dämpferlager (11) im Luftfederdeckel (24) in axialer Richtung der Kolbenstange (48) des Stoßdämpfers zwischen zwei Einspannflächen (22, 24) verspannt ist,
einer Zusatzfeder (42), welche konzentrisch zur Kolbenstange (48) angeordnet und in einem Führungsring (40) geführt wird, der mit dem Deckel (24) fest verbunden ist, und sich an diesem einseitig abstützt,
dem Zylinderrohr des Stoßdämpfers (58), welches an einem ersten Ende über eine Dämpfergabel (59) an einer Radaufhängung befestigt ist und an dem zweiten Ende an der Stirnfläche eine Bohrung für die Kolbenstange (48) aufweist, wobei sich bei fast vollständiger Einfederung des Luftfedermodules (21) die Stirnfläche des Zylinderrohres (58) an der Zusatzfeder (42) abstützt,
wobei das Luftfedermodul (21) zur Federung- und Dämpfung von Schwingungen in Kraftfahrzeugen dient **dadurch gekennzeichnet, dass** das Dämpferlager (10, 11, 12) nach einem oder mehreren der vorherigen Ansprüche ausgebildet ist.
